# EUROPEAN PATENT APPLICATION

(11) **EP 2 797 098 A1**
(43) Date of publication of application: **29.10.2014**
(21) Application number: 12858846.4
(22) Date of filing: 17.12.2012
(51) Int. Cl.: H01H 37/76, H01M 2/34, H01M 10/44, H01M 10/48, H02H 3/08, H02H 7/18, H02J 7/00

(54) **PROTECTIVE ELEMENT, PROTECTIVE ELEMENT FABRICATION METHOD, AND BATTERY MODULE IN WHICH PROTECTIVE ELEMENT IS EMBEDDED**

(30) Priority: 19.12.2011 JP 2011277123
(71) Applicant: Dexerials Corporation, Tokyo 141-0032 (JP)
(72) Inventor: KOMORI, Chisato, Tokyo 141-0032 (JP); FURUUCHI, Yuji, Tokyo 141-0032 (JP); YONEDA, Yoshihiro, Tokyo 141-0032 (JP); MUKAI, Koichi, Tokyo 141-0032 (JP); EJIMA, Koji, Tokyo 141-0032 (JP); FUJIHATA, Takashi, Tokyo 141-0032 (JP); FURUTA, Kazutaka, Tokyo 141-0032 (JP); ARAKI, Toshiaki, Tokyo 141-0032 (JP)
(74) Representative: Müller - Hoffmann & Partner
(86) International application number: PCT/JP2012/082684
(87) International publication number: WO 2013/094565

(57) **Abstract**

An object of the present invention is to provide a protective element with which, while implementing a reduced height, a reliable blowout of a low-melting point metal upon a current path by heat of a heating body is possible. The protective element includes: a substrate (11) in which a concave portion (11a) is formed, a heating body (12) which is layered in the concave portion (11a); a second substrate (13) which is layered upon the substrate (11) to cover the heating body (12); first and second electrodes (14a), (14b) which are layered upon the surface of the substrate (11) on which the second substrate (13) is layered; a heating body electrode (15) which is layered upon the second substrate (13) to be superimposed with the heating body (12), and which is electrically connected to the heating body (12) and a current path between the first and the second electrodes; and a low-melting point element (16) which is layered from the heating body electrode to the first and second electrodes, and which causes a blowout of the current path between the first electrode and the second electrode by heating. The heating body electrode (15) is positioned in the same location relative to the first electrode (14a) and the second electrode (14b) which is specified in the thickness direction of the substrate (11).

## Description

### Field of the Invention

This invention relates to a protective element that protects a circuit connected onto a current path by causing a blowout to the current path, a method for manufacturing such a protective element, and a battery module in which the protective element is embedded.

The present application asserts priority rights based on JP Patent Application 2011-277123 filed in Japan on December 19, 2011 and JP Patent Application 2012-274222 filed in Japan on December 17, 2012. The total contents of disclosure of the Patent Application of the senior filing date are to be incorporated by reference into the present Application.

### Background of the Invention

In general, a charging and discharging circuit for a secondary battery, such as a lithium ion battery or the like, has a function for shutting down an output of the battery by activating many protective circuits (Patent Document 1).

In the case when this charging and discharging circuit is normally operated, the output is turned ON/OFF by using an FET transistor; however, since an instantaneous heavy current, such as typically represented by a lightening surge, tends to exceed the operation time of the FET transistor, a protective circuit such as a fuse for detecting an overcurrent to cause a shutdown is used as a protective circuit from the viewpoint of protecting inner circuits. Moreover, an FET is used so as to monitor the state of a battery and shut down the output of the battery, when an abnormal state, such as an overcharge, an overdischarge, heat generation or the like of the battery, is detected.

Moreover, as described in Patent Document 2, the safety of a secondary battery is ensured by using multiple protective circuits having a protective element that compulsorily shuts down a charging operation to a buttery, in the case when, upon charging a secondary battery, a detection of an overcharge to the battery, an abnormal temperature rise of the battery, an erroneous operation due to heat generation of the FET occurs.

Moreover, as described in Patent Document 3, as a protective element for a protective circuit for such a lithium ion secondary battery, a structure has been generally known in which a heating body is formed in the protective element, and by using this heating body, a low-melting point metal on a current path is blown out.

### Prior-Art Documents

### Patent Document

PTL 1: Japanese Patent Application Laid-Open No. 2008-29167
PTL 2: Japanese Patent Application Laid-Open No. 2006-109596
PTL 3: Japanese Patent Application Laid-Open (Tokkai-Hei) No. 7-153367

### Summary of the Invention

For example, by the appearance of a slate-type information terminal or the like, it is expected to further make thinner an electronic apparatus requiring multiple protections.

In the protective element as described in the above-mentioned Patent Document 3, a structure is adopted in which a heating body and a low-melting point metal are thermally connected to each other, with an insulating member interposed therebetween; however, the following problems have been raised.

First, in the structure of a conventional protective element, a heating body, an insulating layer and an electrode for connecting a low-melting point metal need to be layered on a substrate. Then, a low-melting point metal is connected to the upper portion of this electrode, and further, on its upper portion, a cap, an inner protective plate or the like for protecting the inside of the element need to be installed, with the result that the entire thickness of a product tends to be increased.

Furthermore, since a comparative large protruding portion is formed on a gap between electrodes to which the low-melting point metal is connected, upon heating the low-melting point metal to be allowed to flow, the flux is interrupted to cause a longer period of time required for a blowout.

In view of these circumstances, the present invention has been devised, and its object is to provide a protective element with which, while realizing a reduced height, a reliable blowout of a low-melting point metal upon a current path by heat of a heating body is carried out, and a method for manufacturing such a protective element, and a battery module in which such a protective element is embedded.

As the means for solving the above-mentioned problems, a protective element relating to the present invention is provided with: a substrate composed of a first insulating member with a concave portion formed thereon, a heating body layered on the concave portion of the substrate, a second insulating member layered on the substrate so as to cover at least the heating body, first and second electrodes layered on a surface of the substrate on which the second insulating member is layered, a heating body electrode layered on the second insulating member so as to be superimposed with the heating body, and electrically connected onto a current path between the first and second electrodes as well as onto the heating body, and a low-melting point metal that is layered from the heating body electrode toward the first and second electrodes to cause a blowout of a current path between the first electrode and the second electrode by heating, and in this structure, the heating body electrode is disposed at a position specified in the thickness direction of the substrate that is the same position or a lower position relative to the first electrode and the second electrode.

Moreover, a method for manufacturing a protective element relating to the present invention is provided with the steps of: stacking a heating body in a concave portion of a substrate made of a first insulating member on which the concave portion is formed; stacking a second insulating member on the substrate so as to cover at least the heating body; stacking first and second electrodes on a surface of the substrate on which the second insulating member is stacked; stacking a heating body electrode electrically connected onto a current path between the first and second electrodes as well as onto the heating body on the second insulating member so as to be superimposed with the heating body; and stacking a low-melting point metal by which the current path between the first electrode and the second electrode is blown out by heating from the heating body electrode over to the first and second electrodes, and in this method, the heating body electrode is disposed at a position specified in the thickness direction of the substrate that is the same position or a lower position relative to the first electrode and the second electrode.

Moreover, a battery module relating to the present invention is provided with a battery composed of one or more chargeable and dischargeable battery cells, a charging and discharging control circuit that is connected to the battery in series with each other so as to control charging and discharging processes of the battery, a protective element connected onto a charging and discharging current path between the battery and the charging and discharging control circuit, a detection circuit for detecting a voltage value of each of the battery cells of the battery, and a current control element for controlling an electric current flowing through the protective element, and in this structure, the protective element is provided with: a substrate composed of a first insulating member with a concave portion formed thereon, a heating body on the concave portion of the substrate, a second insulating member layered on the substrate so as to cover at least the heating body, first and second electrodes layered on a surface of the substrate on which the second insulating member is layered, and connected onto the charging and discharging current path, a heating body electrode layered on the second insulating member so as to be superimposed with the heating body, and electrically connected onto a current path between the first and second electrodes as well as onto the heating body, and a low-melting point metal that is layered from the heating body electrode toward the first and second electrodes to cause a blowout of a current path between the first electrode and the second electrode by heating, and in this structure, the heating body electrode is disposed at a position specified in the thickness direction of the substrate that is the same position or a lower position relative to the first electrode and the second electrode, and the current control element carries out a controlling process such that when a voltage value of each of the battery cells detected by the detection circuit is located out of a predetermined range, a current is allowed to flow from a heating body electrode to a heating body.

Moreover, a protective element relating to the present invention is provided with: a substrate composed of an insulating member, first and second electrodes layered on a surface of the substrate, a substrate electrode layered between the first and second electrodes on the surface of the substrate, a low-melting point metal that is layered from the substrate electrode toward the first and second electrodes to cause a blowout of a current path between the first electrode and the second electrode by heating, a cap covering the surface of the substrate, a heating body formed on a ceiling surface portion of the cap; and a heating body electrode layered on the surface of the substrate, and electrically connected to the heating body through a conductive layer formed on the cap, and in this structure, the substrate electrode is disposed at a position specified in the thickness direction of the substrate that is the same position or a lower position relative to the first electrode and the second electrode.

Furthermore, a battery module relating to the present invention is provided with: a battery composed of one or more chargeable and dischargeable battery cells, a charging and discharging control circuit that is connected to the battery in series with each other so as to control charging and discharging processes of the battery, a protective element connected onto a charging and discharging current path between the battery and the charging and discharging control circuit, a detection circuit for detecting a voltage value of each of the battery cells of the battery, and a current control element for controlling an electric current flowing through the protective element, and in this structure, the protective element is provided with: a substrate composed of an insulating member, first and second electrodes formed on a surface of the substrate, a substrate electrode layered between the first and second electrodes on the surface of the substrate, a low-melting point metal that is layered from the substrate electrode toward the first and second electrodes to cause a blowout of a current path between the first electrode and the second electrode by heating, a cap covering a surface of the substrate, a heating body formed on a ceiling surface portion of the cap, a heating body electrode layered on the surface of the substrate and electrically connected to the heating body through a conductor layer formed on the cap, and in this structure, the substrate electrode is disposed at a position specified in the thickness direction of the substrate that is the same position or a lower position relative to the first electrode and the second electrode, and the current control element carries out a controlling process such that when a voltage value of each of the battery cells detected by the detection circuit is located out of a predetermined range, a current is allowed to flow from the heating body electrode to the heating body.

### Effects of the Invention

In the present invention, since the heating body is sandwiched between a substrate made of a first insulating member and a second insulating member, the positions of the heating body and a low-melting point metal can be adjusted with high precision in accordance with the thickness of the second insulating member, and since a heating body electrode positioned at a current path between the first and second electrodes is prevented from protruding relative to the first electrode and the second electrode, the low-melting point metal is not formed into a convex shape, so that when heated and allowed to flow, its flux is not interrupted. Therefore, the present invention makes it possible to positively achieve a reliable blowout of the low-melting metal on a current path by heat of the heating body, while implementing a reduced height.

### Brief Description of Drawings

Figure 1 is a view showing an overall configuration of a battery module, in which a protective element to which the present invention is applied is embedded.
Figure 2 is a view showing a circuit configuration of a protective element to which the present invention is applied.
Figure 3(A) and Figure 3(B) are views for describing a specific structure of the protective element to which the present invention is applied.
Figure 4 is a view for describing a change in a blowout time when a distance d1 between a heating body and a heating body electrode is changed.
Figure 5 is a view for describing a configuration of a protective element relating to a comparative example.
Figure 6(A) and Figure 6(B) are views for describing a blowout characteristic of a low-melting point metal in a protective element to which the present invention is applied and a protective element relating to a comparative example.
Figure 7(A) and Figure 7(B) are views for evaluating a product entire thickness in the protective element to which the present invention is applied and the protective element relating to the comparative example.
Figure 8(A) and Figure 8(B) are views for describing a specific structure of a protective element relating to a modified example to which the present invention is applied.
Figure 9(A) and Figure 9(B) are views for describing a specific structure of a protective element relating to another embodiment to which the present invention is applied.
Figure 10(A), Figure 10(B) and Figure 10(C) are views for describing a change in a blowout time in the case when an electrode step difference d4 is changed.
Figure 11 is a view for describing a modified example of a protective element to which the present invention is applied.
Figure 12 is a view for describing a modified example of a protective element to which the present invention is applied.

### Detailed Description of the Invention

Referring to Figs., the following description will discuss embodiments for carrying out the present invention in detail. Additionally, the present invention is not intended to be limited only by the following embodiments, and it is needless to say that various modifications may be made therein within a scope not departing from the gist of the present invention.

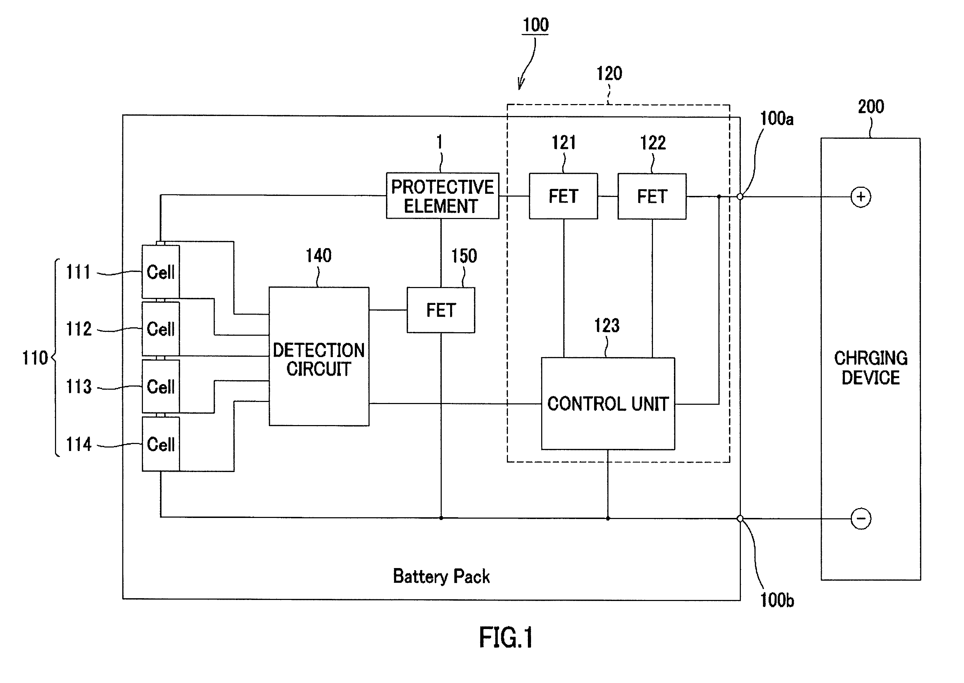

A protective element to which the present invention is applied is, for example, a circuit to be embedded in a battery composed of chargeable and dischargeable battery cells and a charging and discharging control circuit, which is embedded and used in a battery module 100 having a battery 110 composed of four in total chargeable and dischargeable battery cells 111 to 114, for example, shown in Fig. 1.

That is, the battery module 100 has the battery 110, a charging and discharging control circuit 120 for controlling charging and discharging processes of the battery 110, a protective element 1 to which the present invention is applied so as to protect the battery 110 and the charging and discharging control circuit 120, a detection circuit 140 for detecting a voltage of each of the battery cells 111 to 114, and a current control element 150 for controlling operations of the protective element 1 in accordance with the detection results of the detection circuit 140.

As described above, the battery 110 is composed of battery cells 111 to 114, such as, for example, lithium ion batteries, which are series connected to one after another and require controlling processes so as not to cause an overcharged state or an overdischarged state, and is removably connected to a charging device 200 so that a charging voltage is applied thereto from a charging device 200 through a positive electrode terminal 100a and a negative electrode terminal 100b of the battery module 100.

The charging and discharging control circuit 120 is provided with two current control elements 121, 122 that are series connected onto a current path, with an electric current flowing from the battery 110 to the charging device 200, and a control unit 123 for controlling operations of these current control elements 121, 122. Each of the current control elements 121, 122 is composed of, for example, field-effect transistors (hereinafter, referred to as "FET"), and controls conduction and blowout of the current path of the battery 110 by a gate voltage controlled by the control unit 123. The control unit 123 is operated upon receipt of a power supply from the charging device 200, and in the case when based upon the result of detection by the detection circuit 140, the battery 110 is in an overdischarged or overcharged state, controls the operation of the current control element 121, 122 so as to cause a blowout of the current path.

The protective element 1 is connected onto, for example, a charging and discharging current path between the battery 110 and the charging and discharging control circuit 120, and its operations are controlled by the current control element 150.

The detection circuit 140 is connected to the respective battery cells 111 to 114, and detects a voltage value of each of the battery cells 111 to 114 so that the detected voltage value is supplied to the control unit 123 of the charging and discharging control circuit 120. Moreover, in the case when any one of the battery cells 111 to 114 causes an overcharging voltage or an overdischarging voltage, the detection circuit 140 releases a control signal for controlling the current control element 150.

In the case when the detection signal released from the detection circuit 140 shows that the voltage value of any one of the battery cells 111 to 114 is located out of a predetermined range, that is, more specifically, has caused an overcharged or overdischarged state, the current control element 150 operates the protective element 1 to cause a blowout of the charging and discharging current path of the battery 110.

In the battery module 100 configured as described above, the following description will discuss the configuration of the protective element 1 in detail.

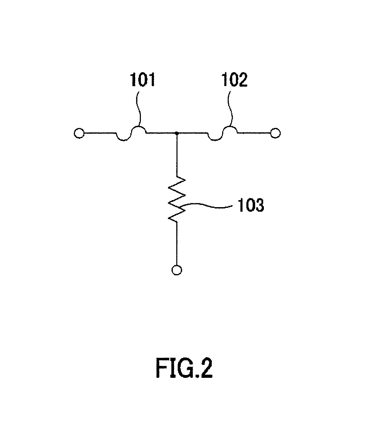

First, the protective element 1 to which the present invention is applied is provided with a circuit configuration, for example, shown in Fig. 2. That is, the protective element 1 has the circuit configuration composed of fuses 101, 102 connected in series with each other, and a resistor 103 that melts the fuses 101, 102 when energized through a contact point between the fuses 101, 102. Moreover, in the protective element 1, for example, the fuses 101, 102 are connected onto the charging and discharging current path, with the resistor 103 being connected to the current control element 150.

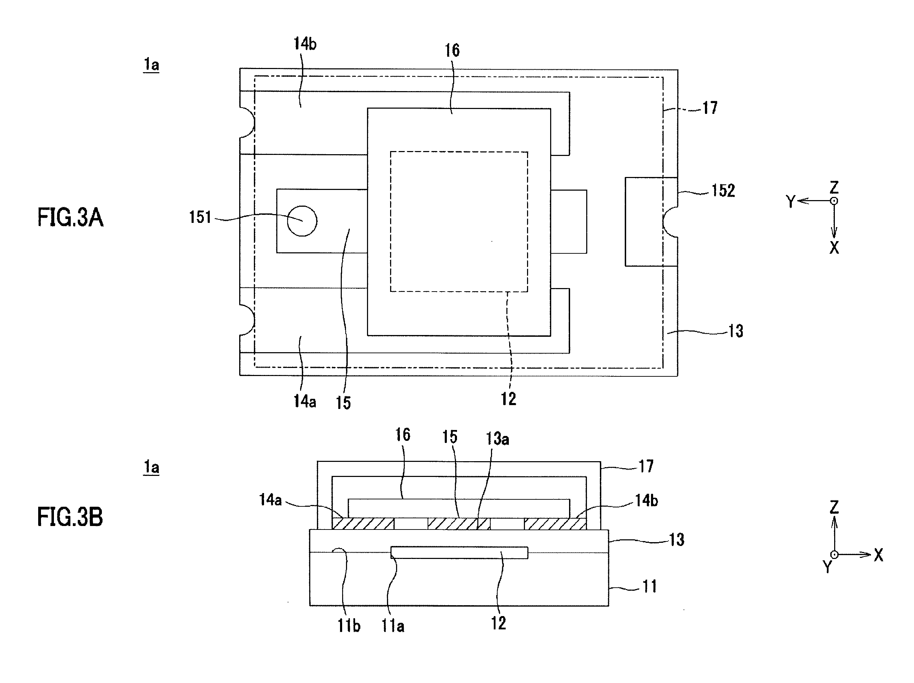

The protective element 1 having the above-mentioned circuit configuration can be realized a reliable blowout of a low-melting metal on a current path by heat of a heating body as well as a reduced height, for example, by a structural body 1a, shown in Fig. 3.

In this case, Fig. 3(A) is a cross-sectional view seen from the XY plane of the structural body 1a disposed based upon the XYZ axes of three-dimensional orthogonal coordinates. Moreover, Fig. 3(B) is a view for describing a layered structure of the structural body 1a seen from the XZ plane.

The structural body 1 a is configured by stacking the following members on a rectangular-shaped substrate 11 made of a first insulating member on which a concave portion 11a is formed. In this case, the first insulating member is a member having an insulating property, for example, including alumina, glass ceramics, mullite, zirconia or the like.

First, on the substrate 11, a heating body 12 functioning as the above-mentioned resistor 103 is layered on the concave portion 11a formed in the center thereof. In this case, the heating body 12 is a conductive member having a comparatively high resistance value, made of, for example, W, Mo, Ru or the like, which generates heat when energized.

Subsequently, a second substrate 13 serving as a second insulating member is layered thereon in a manner so as to cover the entire surface 11b of the substrate 11 including the concave portion 11a in which the heating body 12 is layered. In this case, in the same manner as in the first insulating member, the second insulating member is a member having an insulating property, for example, including alumina, glass ceramics, mullite, zirconia or the like.

Additionally, the second substrate 13 may be formed by using, for example, a ceramic substrate of a film shape or a sheet shape, or by coating the surface 11b with a pasty insulating material. From the viewpoint of preventing the generation of pinholes and subsequent degradation in the insulating property, when the second substrate 13 is made thinner, in particular, a ceramic substrate in a film shape is preferably adopted as the second substrate 13.

Moreover, in order to realize a preferable blowout characteristic with respect to the low-melting point metal 16 to be described later, the second substrate 13 made of the second insulating member is preferably prepared as a member having a higher thermal conductivity than that of the substrate 11 made of the first insulating member. For example, in the case when a glass ceramic material having a thermal conductivity of 1.9 to 2.2 is used as the first insulating member of the substrate 11, it is preferable to use a dielectric paste having a thermal conductivity of 2.5 to 3.5 as the insulating material for the second substrate 13.

Subsequently, above a surface 11b of the substrate 11 on which the second substrate 13 is layered, a first electrode 14a and a second electrode 14b are layered. In this case, the first electrode 14a and the second electrode 14b are made of, for example, W, MoAg, Pt, Pd, Sn, Au, Cu or the like, and when embedded in the aforementioned charging and discharging control circuit 120, these are connected onto the charging and discharging current path.

Subsequently, on the upper surface 13a of the second substrate 13 on which the heating body 12 is superimposed, a heating body electrode 15 is layered. In this case, the heating body electrode 15 is made of, for example, W, Mo, Ag, Pt, Pd, Sn, Au, Cu or the like, and prepared as an electrode that is electrically connected onto a current path between the first electrode 14a and the second electrode 14b as well as onto the heating body 12. Moreover, the heating body electrode 15 is disposed at a position having the same height as that of the first electrode 14a and the second electrode 14b, with the height in the thickness direction of the substrate 11, that is, with the height in the z-axis direction.

Next, over an area from the heating body electrode 15 to the first electrode 14a and the second electrode 14b, a low-melting point metal 16 is layered. In this case, the low-melting point metal 16 is a member corresponding to the above-mentioned fuses 101, 102, and made of, for example, In, Ag, Sn, Pb, Au or the like, which functions as a blowout of the current path between the first electrode 14a and the second electrode 14b by heating.

Moreover, after the low-melting point metal 16 has been layered, a cap 17 is disposed so as to cover the low-melting point metal 16.

Additionally, as shown in Fig. 3(A), in the structural body 1a, the heating body electrode 15 is electrically connected to the heating body 12 through a through hole 151 formed in the thickness direction of the substrate 11. Moreover, the heating body 12 is electrically connected to a connection terminal 152, and as described earlier, is further electrically connected to the current control element 150, for example, through this connection terminal 152.

The protective element 1 relating to the structural body 1a formed as described above is configured such that the heating body 12 is sandwiched between the substrate 11 and the second substrate 13, with the height in the thickness direction of the substrate 11 in the heating body electrode 15 being set to the same height as the first electrode 14a and the second electrode 14b.

In this manner, the protective element 1 relating to the structural body 1a can adjust the positions of the heating body 12 and the low-melting point metal 16 with high precision by the thickness of the second substrate 13 so that as a result, it is possible to easily obtain a preferable blowout characteristic.

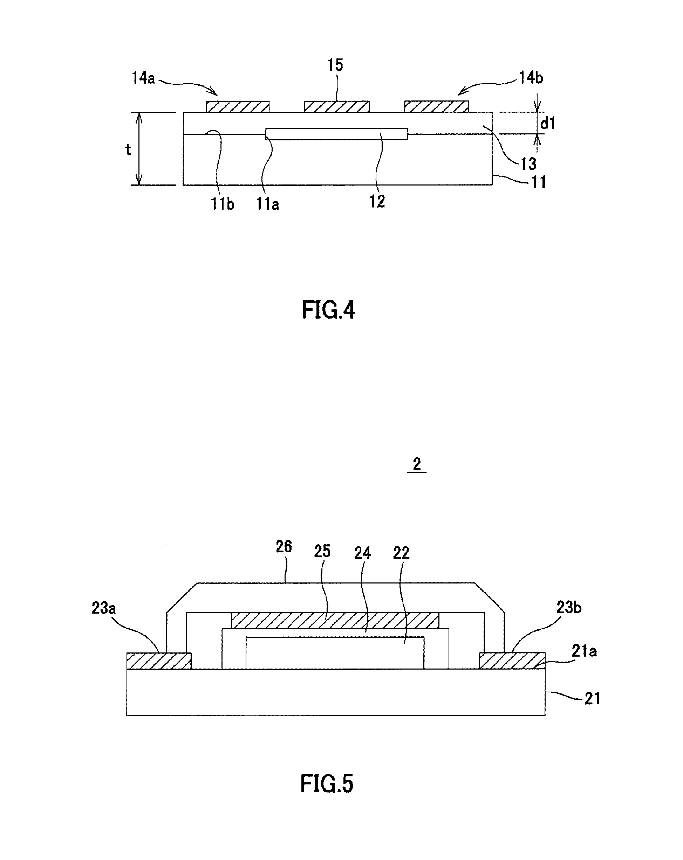

For example, Table 1 shows a change in a blowout time when a distance d1 between the heating body 12 and the heating body electrode 15 is changed as shown in Fig. 4. In this case, as prerequisites, the entire thickness t of the substrate 11 and the second substrate 13 is set to 200µm and by using the heating body 12 having an electric power consumption of 4W, the distance d1 is changed from 20µm to 200µm.

**[Table 1]**

| d1 [µm] | 20 | 50 | 100 | 150 | 200 |
|---|---|---|---|---|---|
| Blowout time [sec] | 5 | 9 | 15 | 30 | 39 |

As clearly indicated by Table 1, as the distance d1 between the heating body 12 and the heating body electrode 15 becomes smaller, a better blowout characteristic can be obtained. Based upon the results, it is clear that in order to realize a good blowout characteristic, it is preferable to adjust the distance d1 with high precision. The protective element 1 relating to the structural body 1a makes it possible to adjust the positions of the heating body 12 and the low-melting point metal 16 with high precision by the thickness of the second substrate 13, and consequently to easily obtain a better blowout characteristic.

Moreover, in the protective element 1 relating to the structural body 1 a, since the heating electrode 15 is kept so as not to protrude in the thickness direction of the substrate 11, that is, in the z-axis direction, relative to the first electrode 14a and the second electrode 14b, the shape of the low-melting point metal 26 is prevented from being formed into a convex shape relative to the substrate 21, for example, as in the case of the protective element 2 relating to a comparative example shown in Fig. 5; therefore, even in the case when it is heated and allowed to flow, the flux is not interrupted.

The protective element 2 relating to the comparative example shown in Fig. 5 is manufactured in the following manner. First, a heating body 22, a first electrode 23 a and a second electrode 23b are layered on the same plane 21a of a substrate 21.

Then, a second insulating member 24 is layered thereon so as to cover only the heating body 22 among the heating body 22, the first electrode 23a and the second electrode 23b layered on the same plane 21a of the substrate 21. Moreover, on the second insulating member 24, a heating body electrode 25 to be electrically connected to the heating body 22 is layered so as to be superimposed on the heating body 22. Furthermore, a low-melting point metal 26 is layered over the first electrode 23a to the second electrode 23b from the heating body electrode 25.

In the case of the protective element 2 manufactured in this manner, since the shape of the low-melting point metal 26 is formed into a convex shape, upon being heated and allowed to flow, its flux is interrupted because of the following reasons.

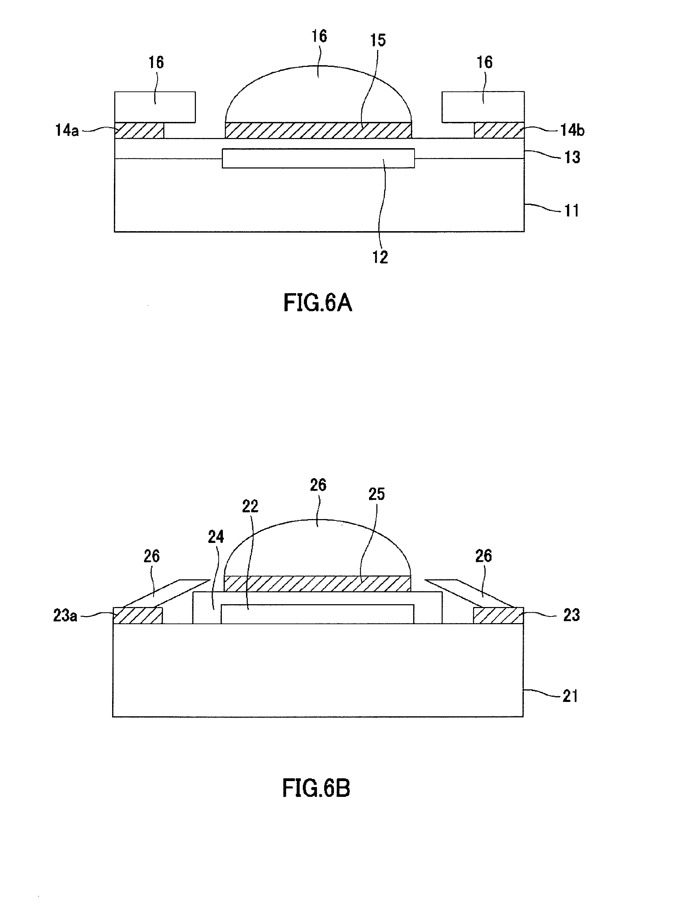

Referring to Fig. 6, an explanation will be given to blowout characteristic of a low-melting point metal about the protective element 1 relating to the present invention and the protective element 2 relating to the comparative example.

In the case of the protective element 1 relating to the present embodiment, when the low-melting point metal 16 is heated to fuse, the low-melting point metal 16 is drawn into the respective electrodes, as shown in Fig. 6(A), and in particular, more low-melting point metal 16 is drawn into the vicinity of the heating body electrode 15 near the heating body 12. In this case, since the heating body electrode 15 in the protective element 1 is kept so as not to protrude to the first electrode 14a and the second electrode 14b, more low-melting point metal 16 can be easily drawn into the heating body electrode 15.

In contrast, in the case of the protective element 2, when the low-melting point metal 26 is heated to fuse, as shown in Fig. 6(B), a flowing force of the low-melting point metal 26 is exerted toward the first electrode 23 a and the second electrode 23b located at a position lower than the heating body electrode 25 due to the gravity, with the result that the flowability of the low-melting point metal 26 of a portion to be drawn into the heating body electrode 25 is interrupted.

In this manner, since the protective element 1 relating to the present embodiment makes it possible to prevent the low-melting point metal 16 from being formed into a convex shape, and since upon being heated and allowed to flow, the flux is not interrupted, it is possible to carry out a reliable blowout of the low-melting point metal 16 on the current path quickly.

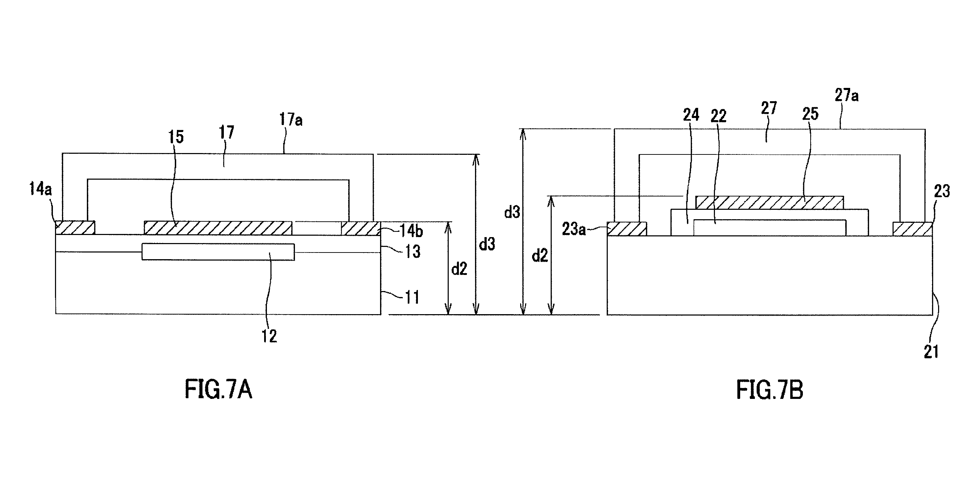

Moreover, in the protective element 1 relating to the present embodiment shown in Fig. 7(A) and the protective element 2 relating to the comparative example shown in Fig. 7(B), in the case when the thicknesses from the electrodes having the highest position to the uppermost portions 17a, 27a of the cap 17, 27 covering the low-melting point metals, not shown, are set to the same thickness, the thicknesses from the lower portion of the substrate 11, 21 to the electrodes having the highest position (hereinafter, referred to as "substrate thickness d2") can be made thinner in the protective element 1 relating to the present embodiment, in comparison with the protective element 2 relating to the comparative example, as shown in Figs. 7(A) and 7(B). As a result, the protective element 1 relating to the present embodiment makes it possible to reduce the entire thickness (hereinafter, referred to as "product entire thickness d3") of the product itself in comparison with the protective element 2 relating to the comparative example.

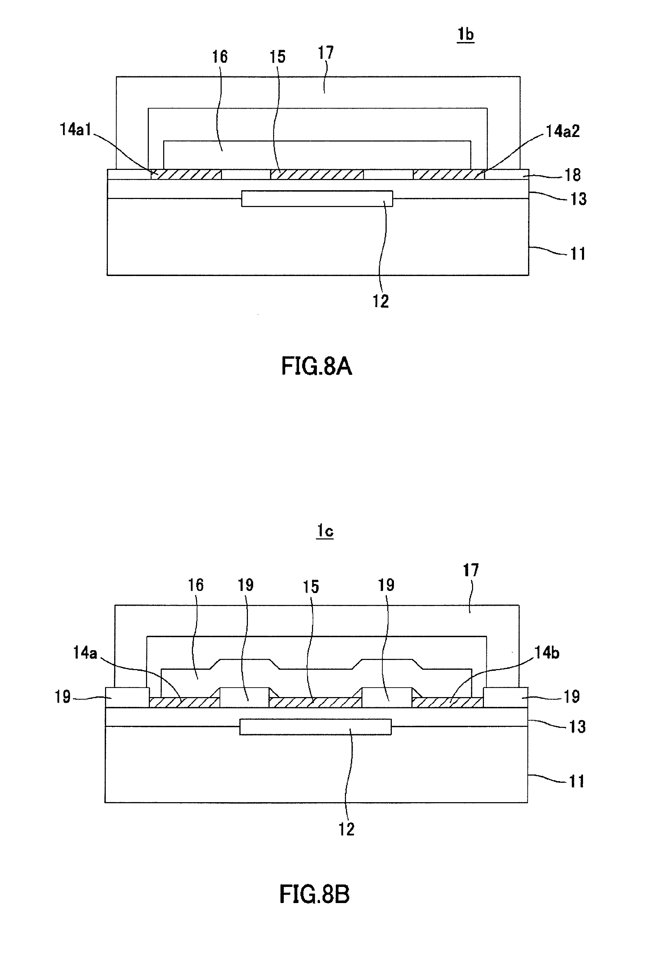

Moreover, the protective element 1 may have a structural body 1b relating to a modified example, as shown in Fig. 8(A), in which a third substrate 18 is layered on a gap between the respective electrodes on the second substrate 13 as well as on the outer peripheral portion thereof. The third substrate 18 may be position-adjusted so that the upper surfaces of the first electrodes 14a1, the second electrode 14a2 and the heating body electrode 15 can respectively have planes having the same level.

Furthermore, the protective element 1 may have a structural body 1c relating to a modified example, as shown in Fig. 8(B), in which a fourth substrate 19 is layered on a gap between the respective electrodes on the second substrate 13 as well as on the outer peripheral portion thereof. The fourth substrate 19 has its upper surface raised to a position higher than the respective electrodes, that is, the first electrode 14a, the second electrode 14b and the heating body electrode 15. Therefore, upon causing a blowout of the low-melting point metal 16, the structural body 1c makes it possible to prevent the low-melting point metal 16 from remaining among the electrodes, thereby making it possible to positively carry out a reliable blowout of the current path by heating the heating body 12.

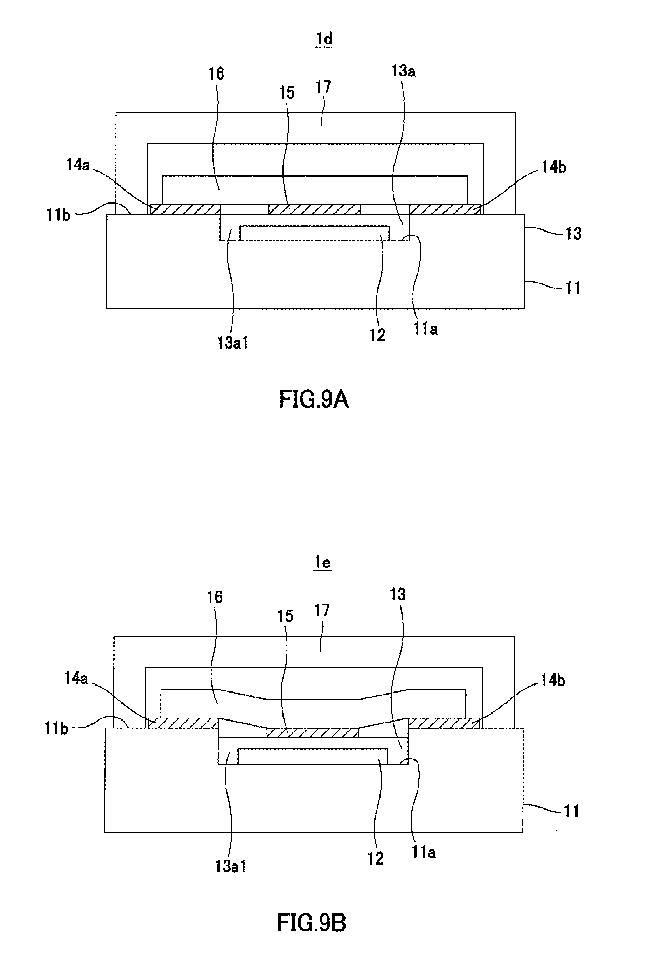

The protective element 1 to which the present invention is applied may have a configuration as a structural body 1d relating to a second embodiment in which, as shown in Fig. 9(A), a concave portion 11a capable of embedding the heating body 12 therein is formed in the center of the substrate 11, and the heating body 12 embedded in the concave portion 11 a is coated with a second insulating member 13a1 by using, for example, a printing process, so that the upper surface 11b of the substrate 11 and the upper surface 13a of the second insulating member 13a1 can respectively have planes having the same level. In this case, in the structural body 1d, by stacking the heating body electrode 15 on the upper surface 13 a of the second insulating member 13a1, the height of the heating body electrode 15 in the thickness direction of the substrate 11 can be set to the same height as that of the first electrode 14a and the second electrode 14b, in the same manner as in the structural bodies 1a to 1c. Moreover, in the structural body 1d, the shape of the low-melting point metal 16 is formed into a flat plate shape, and the connection reliability to each of the electrodes before blowout is consequently enhanced so that it is possible to positively carry out a blowout between the electrodes quickly at the time of a blowout process.

Moreover, the protective element 1 to which the present invention is applied may have a configuration as a structural body 1 e relating to the second embodiment in which, as shown in Fig. 9(B), a concave portion 11 a capable of embedding the heating body 12 therein is formed in the center of the substrate 11, and in the concave portion 11a, the heating body 12 and a second insulating member 13a1, which covers the entire heating body 12, may be embedded by using, for example, a printing process. With respect to this structural body 1e, by stacking the heating body electrode 15 on the second insulating member 13a1, the height of the heating body electrode 15 in the thickness direction of the substrate 11 can be made lower than the height of the first electrode 14a and the second electrode 14b. Moreover, in the structural body 1e, the shape of the low-melting point metal 16 is formed into a concave shape in accordance with the height of the heating body electrode 15, and as clearly indicated by performance evaluations to be described later, it becomes possible to positively carry out a blowout between the electrodes quickly at the time of a blowout process.

In this manner, in the structural body 1e, by disposing the heating body electrode 15 in the thickness direction of the substrate 11 so as to have a height lower than the height of the first electrode 14a and the second electrode 14b, it is possible to achieve a particularly good blowout characteristic.

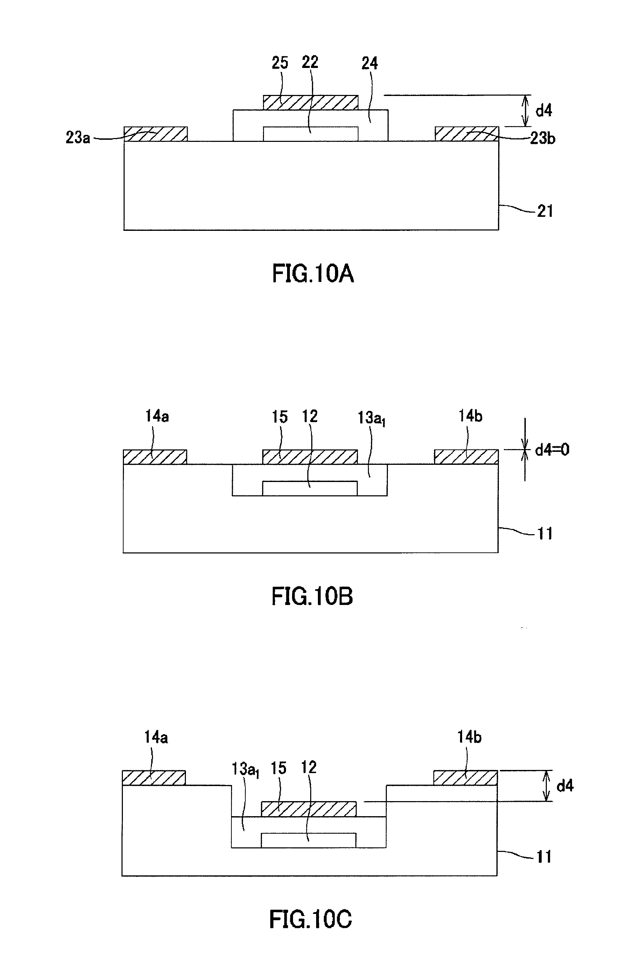

For example, as shown in Fig. 10, the heights of the first electrodes 14a, 23 a and the second electrodes 14b, 23b are kept constant, and when the difference in heights (hereinafter, referred to as "electrode step difference d4") of the heating body electrodes 15, 25 is varied based upon the above mentioned height as the standard, the blowout time relative to the electrode step difference d4 is indicated by the following Table 2.

In this case, the substrate thickness specified by the z-axis direction of the substrates 11, 21 was set to 500µm and the substrate thickness specified by the z-axis direction of the second insulating members 13a1, 24 was set to 200µm, and by using the heating bodies 12, 22 having an electric power consumption of 4W, the distance d2 was varied in a range from -200µm to 300µm.

Fig. 10(A) shows a state in which the electrode step difference is a positive value. That is, this drawing shows the structural body of the protective element 2 of the comparative example. Fig. 10(B) shows a state in which the electrode step difference is 0. That is, this drawing shows the structural body 1d. Fig. 10(C) shows a state in which the electrode step difference is a negative value. That is, this drawing shows the structural body 1e.

**[Table 2]**

| d4[µm] | -200 | -100 | -50 | 0 | 50 | 100 | 200 | 300 |
|---|---|---|---|---|---|---|---|---|
| Blowout time [sec] | 7.7 | 8 | 8.1 | 9 | 11 | 15 | 32 | No blowout |

As clearly indicated by the above Table, as the electrode step difference d4 becomes a smaller value, the blowout time becomes shorter. This is because the fused low-melting point metal becomes more easily drawn into the heating body electrode due to gravity.

In this manner, in the protective element 1 to which the present invention is applied, by adopting the structures of the structural bodies 1d, 1e, the height of the heating body electrode 15 in the thickness direction of the substrate 11 is set the same or lower than the height of the first electrode 14a and the second electrode 14b so that it is possible to achieve a good blowout characteristic. Preferably, in the protective element 1 to which the present invention is applied, by setting the height of the heating body electrode 15 in the thickness direction of the substrate 11 to be lower than the height of the first electrode 14a and the second electrode 14b, it is possible to achieve a better blowout characteristic.

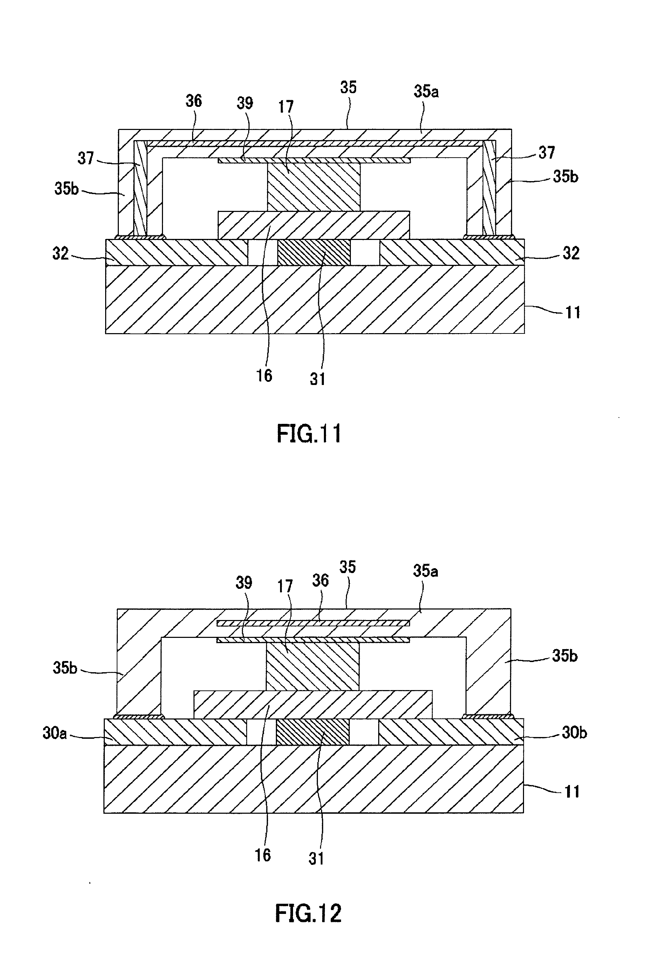

Moreover, in the protective element to which the present invention is applied, in addition to the formation of the heating body 12 in the concave portion 11b of the substrate 11, a heating body may be formed on a cap, as shown in Fig. 11 and Fig. 12. In this structural body If, without installing the heating body on the substrate side 11, by using a heating body 36 formed on a cap 35, the low-melting point metal 16 is blown out. The structural body If has a configuration in which, on a rectangular-shaped substrate 11 made of an insulating member, first and second electrodes 30a, 30b, a substrate electrode 31 layered between the first and second electrodes 30a, 30b, a low-melting point metal 16 layered from the substrate 31 toward the first and second electrode to cause a blowout of the current path between the first electrode 30a and the second electrode 30b by heating, and a pair of heating body electrodes 32, 32 electrically connected to the heating body 36, with a conductive layer 37 formed on the cap 35 interposed therebetween, are installed.

The first electrode 30a and the second electrode 30b are made of, for example, W, Mo, Ag, Pt, Pd, Sn, Au, Cu or the like, and when embedded in the above-mentioned charging and discharging control circuit 120, are connected onto the charging and discharging current path. Moreover, the substrate electrode 31 may be formed by using the same material as that of the first and second electrodes 30a, 30b, and formed on the substrate 11 by a batch process together with the first and second electrodes 30a, 30b.

Onto these first and second electrodes 30a, 30b and the substrate electrode 31, the low-melting point metal 16 is connected.

Moreover, the structural body If is provided with the cap 35 that covers the surface of the substrate 11. The cap 35 is formed by using a member having an insulating property, such as, for example, a ceramic substrate, a glass epoxy substrate or the like, in the same manner as in the substrate 11. Moreover, the cap 35 has a ceiling surface portion 35a on which the heating body 36 is provided, and a side wall 35b on which a conductive layer 37 electrically connected to the heating body 36 is provided.

The conductive layer 37 may be formed by using a known conductive material, such as, for example, Cu, W, Mo, Au or the like. Moreover, the conductive layer 37 is made to face outward from an end face of the bottom end portion of the side wall 35b. Moreover, the side wall 35b has its base end portion connected to the heating body electrodes 32, 32 by using an adhesive agent 38 having conductivity, such as a conductive adhesive paste, a solder paste or the like. Thus, the side wall 35b has its conductive layer 37 electrically connected to the heating electrodes 32, 32.

On the ceiling surface portion 35a, the heating body 36 is formed along a gap relative to the side wall 35b. In the same manner as in the heating body 12, the heating body 36 is a conductive member having a comparatively high resistance value, which generates heat when energized, and is made of, for example, W, Mo, Ru or the like. The heating body 36 is formed by processes in which a powder of an alloy or a composition, a compound of these metals is mixed with a resin binder or the like, to form a paste, and this paste is formed as a pattern on the ceiling surface portion 35a by using a screen printing technique, and subjected to a baking process or the like. After the heating body 36 has been formed on the ceiling surface portion 35a, an insulating member forming the cap 35 is further layered thereon so that the heating body 36 is built into the ceiling surface portion 35a. Moreover, the heating body 36 is formed at a position facing the low-melting point metal 16 when the cap 35 covers over the substrate 11.

Moreover, the heating body 36 has its two connected to the conductive layer 37 formed on the side wall 35b. Furthermore, the ceiling surface portion 35a is allowed to generate heat when the heating body 36 is energized through the heating body electrodes 32, 32 and the conductive layer 37. Therefore, the structural body If makes it possible to heat the low-melting point metal 16 from the ceiling surface portion 35a side.

Moreover, the ceiling surface portion 35a is preferably provided with a cap electrode 39 formed on the inner surface that is made face to face with the low-melting point metal 16. The cap electrode 39 is formed at a position that is superimposed with the heating body 36. When the heating body 36 generates heat so that the low-melting point metal 16 is fused, the cap electrode 39 is made in contact with the fused conductor to allow the fused conductor to be wet and expanded thereon so that the permissible amount for holding the fused conductor can be increased. In this case, the structural body 1f has its cap electrode 39 heated by the heating body 36 so that the fused conductor is positively wet and expanded on the cap electrode 39, making it possible to prevent short circuit caused by overflowed fused conductor.

In the structural body 1f of this type, since no heating body is formed on the substrate 11, the heights in the thickness direction of the substrate 11 between the first and second electrodes 30a, 30b to be formed on the same surface of the substrate 11 and the substrate electrode 31 can be formed into the same level. Therefore, in the structural body If also, as a result, it is possible to easily obtain a good blowout characteristic.

Additionally, in the structural body If also, as described earlier, a configuration may be prepared in which a concave portion 11 a is formed in the center of the substrate 11, and by forming the substrate electrode 31 in the concave portion 11a, the height in the thickness direction of the substrate 11 of the substrate electrode 31 may be made lower than the heights of the first and second electrodes 30a, 30b. Thus, the structural body If is designed such that the shape of the low-melting point metal 16 is formed into a concave shape in accordance with the height of the substrate electrode 31, and as clearly indicated by performance evaluations as described earlier, it becomes possible to positively carry out a blowout between the electrodes quickly at the time of a blowout process.

In this manner, in the structural body If, by setting the height in the thickness direction of the substrate 11 of the substrate electrode 31 to the same height as the height of the first electrode 30a and the second electrode 30b or to a height lower than the height thereof, it is possible to realize, in particular, a good blowout characteristic.

### Reference Signs List

- 1, 2: protective element,
- 1a-1e: structural body,
- 11, 21: substrate,
- 11a: concave portion,
- 11b: surface,
- 12, 22, 36: heating body,
- 13: second substrate,
- 13a: upper surface,
- 13a1, 24: second insulating member,
- 14a, 23a: first electrode,
- 14b, 23b: second electrode,
- 15, 25, 32: heating body electrode,
- 16, 26: low-melting point metal,
- 17, 35: cap,
- 17a: uppermost portion,
- 18: third substrate,
- 19: fourth substrate,
- 21a: plane,
- 37: conductive layer,
- 38: adhesive agent,
- 39: cap electrode,
- 100: buttery module,
- 100a: positive electrode terminal,
- 100b: negative electrode terminal,
- 101, 102: fuse,
- 103: resistor,
- 110: battery,
- 111-114: battery cell,
- 120: charging and discharging control circuit,
- 121: current control element,
- 123: control unit,
- 140: detection circuit,
- 150: current control element,
- 151: through hole,
- 152: connection terminal,
- 200: charging device

## Claims

1. A protective element comprising:
a substrate composed of a first insulating member with a concave portion formed thereon;
a heating body layered on the concave portion of the substrate;
a second insulating member layered on the substrate so as to cover at least the heating body;
first and second electrodes layered on a surface of the substrate on which the second insulating member is layered;
a heating body electrode layered on the second insulating member so as to be superimposed with the heating body, and electrically connected onto a current path between the first and second electrodes as well as onto the heating body; and
a low-melting point metal that is layered from the heating body electrode toward the first and second electrodes to cause a blowout of the current path between the first electrode and the second electrode by heating,
wherein the heating body electrode is disposed at a position specified in the thickness direction of the substrate that is the same position or a lower position relative to the first electrode and the second electrode.

2. The protective element according to claim 1, wherein the heating body and the second insulating member are embedded into the concave portion formed on the substrate.

3. The protective element according to claim 1, wherein the heating body is disposed at a position specified in the thickness direction of the substrate that is a lower position relative to the first electrode and the second electrode.

4. The protective element according to claim 3, wherein the second insulating member is a member having a thermal conductivity higher than that of the first insulating member.

5. A method for manufacturing a protective element comprising the steps of:
stacking a heating body in a concave portion of a substrate made of a first insulating member on which the concave portion is formed;
stacking a second insulating member on the substrate so as to cover at least the heating body;
stacking first and second electrodes on a surface of the substrate on which the second insulating member is stacked;
stacking a heating body electrode electrically connected onto a current path between the first and second electrodes as well as onto the heating body, on the second insulating member so as to be superimposed with the heating body; and
stacking a low-melting point metal by which the current path between the first electrode and the second electrode is blown out by heating, from the heating body electrode over to the first and second electrodes,
wherein the heating body electrode is disposed at a position specified in the thickness direction of the substrate that is the same position or a lower position relative to the first electrode and the second electrode.

6. A battery module comprising:
a battery composed of one or more chargeable and dischargeable battery cells;
a charging and discharging control circuit that is connected to the battery in series with each other so as to control charging and discharging processes of the battery;
a protective element connected onto a charging and discharging current path between the battery and the charging and discharging control circuit;
a detection circuit for detecting a voltage value of each of the battery cells of the battery; and
a current control element for controlling an electric current flowing through the protective element, the protective element further comprising:
a substrate composed of a first insulating member with a concave portion formed thereon;
a heating body layered on the concave portion of the substrate;
a second insulating member layered on the substrate so as to cover at least the heating body;
first and second electrodes layered on a surface of the substrate on which the second insulating member is layered, and connected onto the charging and discharging current path,
a heating body electrode layered on the second insulating member so as to be superimposed with the heating body, and electrically connected onto a current path between the first and second electrodes as well as onto the heating body; and
a low-melting point metal that is layered from the heating body electrode toward the first and second electrodes to cause a blowout of a current path between the first electrode and the second electrode by heating,
wherein the heating body electrode is disposed at a position specified in the thickness direction of the substrate that is the same position or a lower position relative to the first electrode and the second electrode, and
wherein the current control element carries out a controlling process such that when a voltage value of each of the battery cells detected by the detection circuit is located out of a predetermined range, a current is allowed to flow from the heating body electrode to the heating body.

7. A protective element comprising:
a substrate composed of an insulating member;
first and second electrodes layered on a surface of the substrate;
a substrate electrode layered between the first and second electrodes on the surface of the substrate;
a low-melting point metal that is layered from the substrate electrode toward the first and second electrodes to cause a blowout of a current path between the first electrode and the second electrode by heating,
a cap covering the surface of the substrate;
a heating body formed on a ceiling surface portion of the cap; and
a heating body electrode layered on the surface of the substrate, and electrically connected to the heating body through a conductive layer formed on the cap,
wherein the substrate electrode is disposed at a position specified in the thickness direction of the substrate that is the same position or a lower position relative to the first electrode and the second electrode.

8. A battery module comprising:
a battery composed of one or more chargeable and dischargeable battery cells;
a charging and discharging control circuit that is connected to the battery in series with each other so as to control charging and discharging processes of the battery;
a protective element connected onto a charging and discharging current path between the battery and the charging and discharging control circuit;
a detection circuit for detecting a voltage value of each of the battery cells of the battery; and
a current control element for controlling an electric current flowing through the protective element, the protective element being provided with:
a substrate composed of an insulating member;
first and second electrodes layered on a surface of the substrate;
a substrate electrode layered between the first and second electrodes on the surface of the substrate;
a low-melting point metal that is layered from the substrate electrode toward the first and second electrodes to cause a blowout of a current path between the first electrode and the second electrode by heating,
a cap covering the surface of the substrate;
a heating body formed on a ceiling surface portion of the cap; and
a heating body electrode layered on the surface of the substrate, and electrically connected to the heating body through a conductive layer formed on the cap,
wherein the substrate electrode is disposed at a position specified in the thickness direction of the substrate that is the same position or a lower position relative to the first electrode and the second electrode, and
wherein the current control element carries out a controlling process such that when a voltage value of each of the battery cells detected by the detection circuit is located out of a predetermined range, a current is allowed to flow from the heating body electrode to the heating body.
